# EUROPÄISCHE PATENTSCHRIFT

(11) **EP 3 766 351 B1**
(45) Veröffentlichungstag und Bekanntmachung des Hinweises auf die Patenterteilung: **24.08.2022**
(21) Anmeldenummer: 20183576.6
(22) Anmeldetag: 02.07.2020
(51) Int. Cl.: A21C 5/02, A21C 5/04

(54) **TEIGPORTIONIERVORRICHTUNG**
DOUGH CONDITIONING DEVICE
DISPOSITIF DE PORTIONNEMENT DE PÂTE

(30) Priorität: 17.07.2019 DE 202019103931 U
(43) Veröffentlichungstag der Anmeldung: 20.01.2021
(73) Patentinhaber: BackNet GmbH, 33649 Bielefeld (DE)
(72) Erfinder: Meier, Alexander, 91602 Dürrwangen (DE)
(74) Vertreter: Rau, Schneck & Hübner Patentanwälte Rechtsanwälte PartGmbB

(56) Entgegenhaltungen:
- EP-A1- 0 494 367
- EP-A1- 0 643 914
- EP-A2- 0 213 582
- EP-A2- 2 353 390
- EP-B1- 0 643 914
- DE-A1- 2 244 469
- JP-U- S5 756 486

## Beschreibung

Der Inhalt der deutschen Gebrauchsmusteranmeldung DE 20 2019 103 931.0 wird durch Bezugnahme hierin aufgenommen.

Die Erfindung betrifft eine insbesondere mehrreihige Teigportioniervorrichtung mit mindestens einer Portionierkammer zur Vorgabe einer portionierten Teigmenge und mindestens einem Messkolben, der in der Portionierkammer hubverlagerbar ist.

Derartige Teigportioniervorrichtungen sind bekannt aus der DE 10 2013 221 230 A1, aus der EP 2 071 955 B1, aus der EP 3 298 900 A, aus der DE 196 40 176 A1 und aus der EP 0 643 914 A1. Die GB 659,147 beschreibt einen Teigteiler. Die US 3,785,623 beschreibt einen Teigportionierer. Die EP 0 213 582 A2 und die EP 0 494 367 A1 offenbaren Ausführungen von Teigteilmaschinen. Die DE 2 244 469 A offenbart eine Vorrichtung zum Portionieren von Teig. Die EP 2 353 390 A2 offenbart einen Teilkammerträger für eine Teigteilmaschine. Die JP S57 56486 U offenbart einen Riegel.

Es ist eine Aufgabe der vorliegenden Erfindung, eine Teigportioniervorrichtung derart weiterzubilden, dass sie insbesondere auch bei großvolumigen Portionierkammern wartungs- und reinigungsfreundlich gestaltet ist.

Diese Aufgabe ist erfindungsgemäß gelöst durch eine Teigportioniervorrichtung mit den in Anspruch 1 angegebenen Merkmalen.

Erfindungsgemäß wurde erkannt, dass eine senkrecht zur Verlagerungsrichtung der Messkolben vom Kammergehäuse abnehmbare Verdrehsicherungsleiste die Möglichkeit schafft, die Verdrehsicherungsleiste werkzeuglos am Kammergehäuse zu montieren und entsprechend auch werkzeuglos vom Kammergehäuse abzunehmen. Dies vermeidet Probleme, die mit einer ein Werkzeug erzwingenden Montage der Verdrehsicherungsleiste verbunden sind. Zur Wartung bzw. Reinigung der Teigportioniervorrichtung kann die Verdrehsicherungsleiste senkrecht zur Verlagerungsrichtung der Messkolben vom insbesondere schwenkbar ausgeführten Kammergehäuse abgenommen werden. Die Ausbaurichtung ist vom Überstandsabschnitt des Kammergehäuses weg gerichtet, so dass dieser Überstandsabschnitt nicht stört. Entsprechend kann auch ein umfangsseitiger Abschnitt, über den die Messkolben zur Verdrehsicherung mit der Verdrehsicherungsleiste zusammenwirken, vom Überstandsabschnitt weggerichtet sein. Ein Durchmesser der Portionierkammern bzw. eine Schachthöhe eines Gehäuses eines Portioniermoduls kann größer sein als 50 mm und kann beispielsweise 65 mm betragen.

Bei einer Riegeleinheit nach Anspruch 2 kommen die Vorteile der Anbringung der Verdrehsicherungsleiste besonders gut zum Tragen.

Dies gilt entsprechend für Ausführungen der Riegeleinheiten nach den Ansprüchen 3 und 4.

Ein Portionierzylinder nach Anspruch 5 hat sich als besonders geeignet bewährt.

Mit einer Messeinheit nach Anspruch 6 kann beispielsweise eine Länge der Portionierkammern durch eine Relativverlagerung der Messeinheit zum Grundkörper insbesondere einstellbar vorgegeben werden.

Eine versenkte Anordnung von Montageelementen nach Anspruch 7 zur Montage der Messeinheit am Grundkörper sichert, dass die Montageelemente den Ausbau der Verdrehsicherungsleiste nicht stören.

Die Vorteile der Teigportioniervorrichtung mit der senkrecht zur Verlagerungsrichtung der Messkolben ausbaubaren Verdrehsicherungsleiste kommen bei einer mehrreihigen Ausführung nach Anspruch 8 besonders zum Tragen.

Die Vorteile einer Teigbearbeitungsanlage nach Anspruch 9 entsprechen denen, die vorstehend im Zusammenhang mit der Teigportioniervorrichtung bereits erläutert wurden.

Ausführungsbeispiele der Erfindung werden nachfolgend anhand der Zeichnungen näher erläutert. In dieser zeigen:
- Fig. 1: eine Seitenansicht eines Portioniermoduls einer mehrreihigen Teigportionvorrichtung;
- Fig. 2: einen Schnitt durch das Portioniermodul in einer Ebene einer der Portionierkammern des Portioniermoduls;
- Fig. 3: eine perspektivische Ansicht des Portioniermoduls schräg von oben, wobei eine Verdrehsicherungsleiste in einer ausgebauten Situation, nämlich in einer Ausbaurichtung senkrecht zu einer Verlagerungsrichtung von Messkolben des Portioniermoduls in abgenommener Stellung, gezeigt ist, wobei beispielhaft zwei von insgesamt sechs möglichen Messkolben dargestellt sind;
- Fig. 4: das Detail IV in Fig. 3;
- Fig. 5: perspektivisch ein Kammergehäuse der Teigportioniervorrichtung, ausgeführt als Teil eines schwenkbaren Portionierzylinders, wobei die Verdrehsicherungsleiste in einer am Kammergehäuse montierten Position gezeigt ist;
- Fig. 6: eine rückseitige Ansicht des Kammergehäuses, gesehen aus Blickrichtung VI in Fig. 5; und
- Fig. 7: eine Unteransicht des Kammergehäuses, gesehen aus Blickrichtung VII in Fig. 5.

Eine Teigbearbeitungsanlage, von der in der Zeichnung ein Portioniermodul 1 einer in der dargestellten Ausführung sechsreihigen Teigportioniervorrichtung dargestellt ist, dient zum Portionieren und zum Wirken von Teig, z.B. bei der Brötchenherstellung. Entsprechende Teigbearbeitungsanlagen sind bekannt aus der DE 10 2013 221 230 A1, der EP 2 071 955 B1, der EP 3 298 900 A, der DE 196 40 176 A1 und der EP 0 643 914 A1.

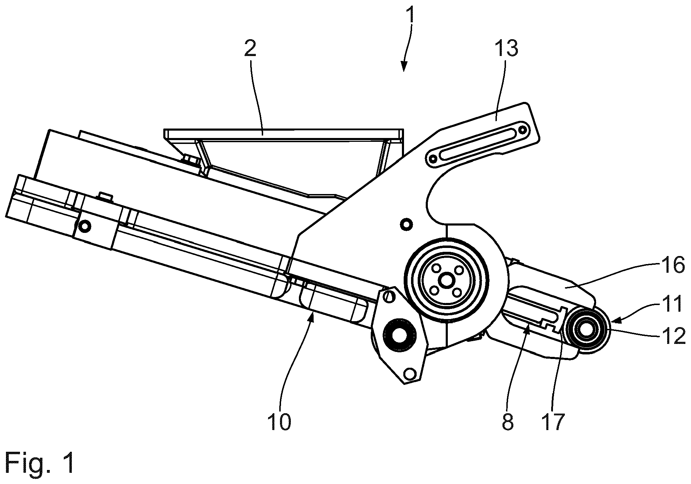

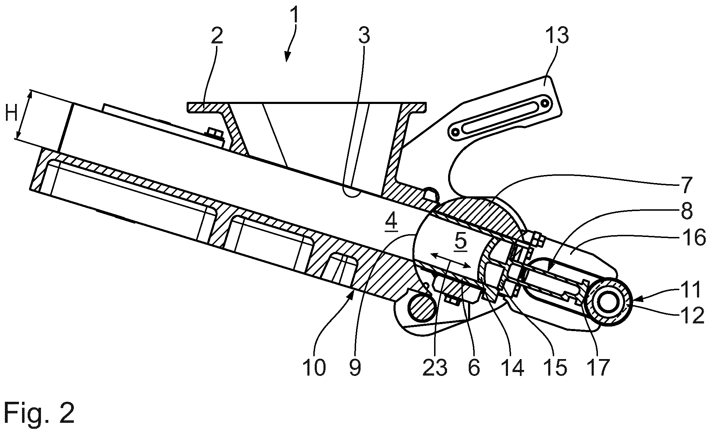

Nicht dargestellter Teig ist in einen Zuführtrichter 2 (vgl. z.B. Fig. 1) einfüllbar. Eine bodenseitige Ausgangsöffnung 3 (vgl. Fig. 2) des Zuführtrichters 2 steht mit einem Förderraum 4 in Verbindung, in dem ein in der Zeichnung nicht dargestellter Förderkolben läuft. Zusammen mit dem Zuführtrichter 2 stellt der Förderkolben eine Teig-Zuführeinrichtung der Teigbearbeitungsanlage dar.

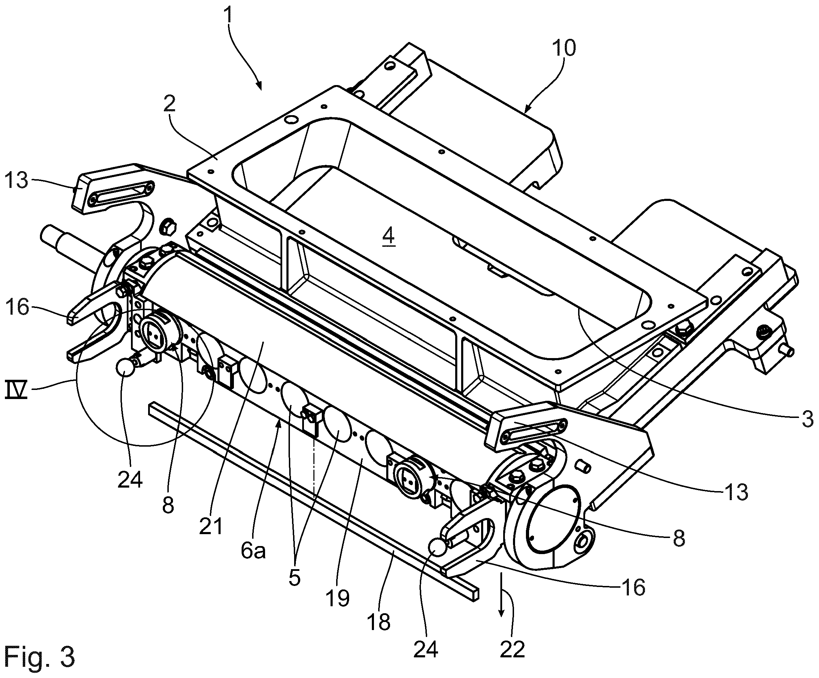

Die Teigbearbeitungsanlage ist insgesamt mehrreihig ausgeführt und hat eine entsprechende Mehrzahl von Portionierkammern 5 zur Vorgabe jeweils einer portionierten Teigmenge. Bei der dargestellten Ausführung liegen insgesamt sechs senkrecht zur Zeichenebene beispielweise der Fig. 1 und 2 nebeneinander angeordnete derartige Portionierkammern 5 vor. Ein Durchmesser der Portionierkammern 5 bzw. eine Schachthöhe H des Förderraums 4 ist größer als 50 mm und kann beispielsweise 65 mm betragen. Mantelwände 6 der Portionierkammern 5 sind in einem schwenkbaren Kammergehäuse 6a eines Portionierzylinders 7 ausgebildet, der, angetrieben über einen nicht näher dargestellten Schwenkantrieb, um eine Schwenkachse verschwenkt werden kann, die senkrecht zur Zeichenebene der Fig. 1 und 2 angeordnet ist. Der Portionierzylinder 7 wird auch als Drehschieber bezeichnet. In den Fig. 1 und 3 liegt der Portionierzylinder 7 in einer Mess-Schwenkstellung vor, in der die Portionierkammern 5 mit dem Förderraum 4 fluchten und mit diesem in Teig-Förderverbindung stehen.

In den Portionierkammern 5 ist jeweils ein Messkolben 8 angeordnet. Der jeweilige Messkolben 8 hat einen ovalen Kolbenquerschnitt. Alternativ kann ein Kolbenquerschnitt des Messkolbens auch kreisrund ausgeführt sein. Der jeweilige Messkolben 8 ist in der ihm zugeordneten Portionierkammer 5 zwischen einer eingezogenen Messstellung, die in der Fig. 2 dargestellt ist, und einer ausgeschobenen Ausstoßstellung hubverlagerbar. In der Ausstoßstellung fluchtet eine stirnseitige Kolbenfläche des jeweiligen Messkolbens 8 mit einer Schwenk-Führungswand 9, die gleichzeitig einen Übergang zwischen dem Portionerzylinder 7 und einem Gehäuse 10 des Portioniermoduls 1 bildet.

Die Messkolben 8 können aus Kunststoff gefertigt sein.

Zur Verlagerung der Messkolben 8 von der Messstellung in die Ausstoßstellung dient eine Antriebseinheit 11, die eine als Steuerrolle 12 ausgebildete Steuerkomponente aufweist. Die Teigportioniervorrichtung ist so ausgeführt, dass eine Verlagerung der Messkolben 8 von der Ausstoßstellung in die Messstellung ausschließlich über einen vom zugeführten Teig auf die Messkolben 8 ausgeübten Förderdruck erfolgt.

Die Steuerrolle 12 hat eine Längserstreckung senkrecht zur Zeichenebene der Fig. 1 und 2. Die Steuerrolle 12 ist mit allen Messkolben 8 zur Übertragung einer Zugkraft von der Steuerrolle 12 auf die Messkolben 8 verbunden.

Zur Antriebseinheit 11 gehört weiterhin mindestens eine Steuerkurve 13, die mit der Steuerrolle 12 zusammenwirkt. Die Steuerkurve 13 ist zweiteilig ausgeführt und wirkt mit gegenüberliegenden freien axialen Steuerabschnitten der Steuerrolle 12 zusammen.

Der jeweilige Messkolben 8 ist über zwei axial beabstandete Führungsflächen 14, 15 in den zugeordneten Portionierkammern 5, nämlich an den Mantelwänden 6, geführt. Anstelle mehrerer Führungsflächen zur Führung in der Portionierkammer 5 kann der jeweilige Messkolben 8 auch genau eine Führungsfläche aufweisen.

Die Hubbewegung des Messkolbens zwischen der Messstellung und der Ausstoßstellung ist über eine zweiteilige Führungsgabel 16 geführt. In der Führungsgabel 16 läuft die Steuerrolle 12. In der Messstellung der Messkolben 8 liegt die Steuerrolle 12, wie in der Fig. 2 dargestellt, nahe einem freien Ende der Führungsgabel 16.

Beim Portionieren des Teigs sorgt der Teigdruck, der über die Teigförderung vom Förderraum 4 in die Portionierkammer 5 erzeugt wird, dafür, dass die zunächst in der Ausstoßstellung vorliegenden Messkolben 8 über den Teigdruck in die Messstellung beispielweise nach Fig. 2 überführt werden.

Über eine Stempelfläche 17 steht der jeweilige Messkolben 8 mit der Steuerrolle 12 in Schubverbindung. Diese Schubverbindung sorgt dafür, dass die Steuerrolle 12 in die in der Fig. 2 dargestellten Messstellung im Bereich des freien Endes der Führungsgabel 16 verlagert ist.

Die Zugverbindung zwischen der Steuerrolle 12 und allen Messkolben 8 sorgt dafür, dass alle Messkolben 8, was die Relativpositionierung innerhalb der jeweiligen Portionierkammer 5 angeht, exakt die gleiche Position einnehmen, unabhängig davon, wie leicht- oder schwergängig die Führung über die Führungsflächen 14, 15 der individuellen Messkolben 8 erfolgt.

Nach Erreichen der Messstellung wird der Portionierzylinder 7 aus der Mess-Schwenkstellung in der Fig. 2 entgegen dem Uhrzeigersinn in die Ausstoß-Schwenkstellung verlagert. Die Messkolben 8 werden im Anschluss von der Messstellung, angetrieben über die Antriebseinheit 11, mit der Steuerrolle 12 und der Steuerkurve 13, in die Ausstoßstellung überführt. Die bis dahin in der Portionierkammer 5 vorliegende Teigportion wird hierüber in eine nachgelagerte Bearbeitungseinheit der Teigbearbeitungsanlage überführt.

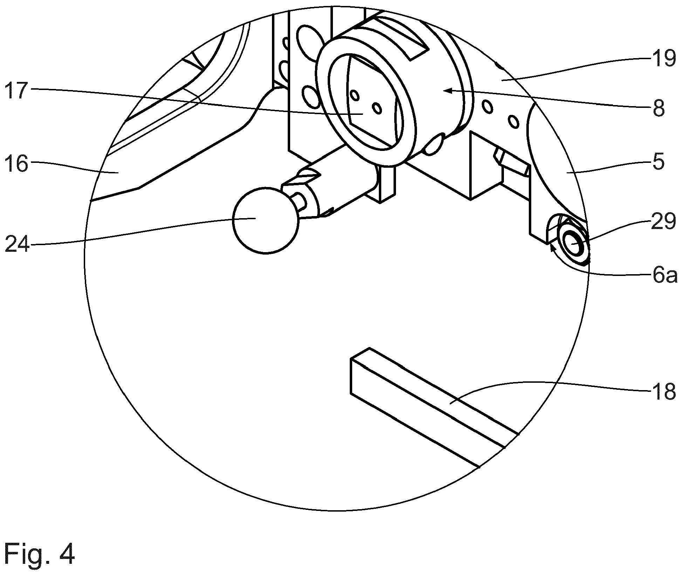

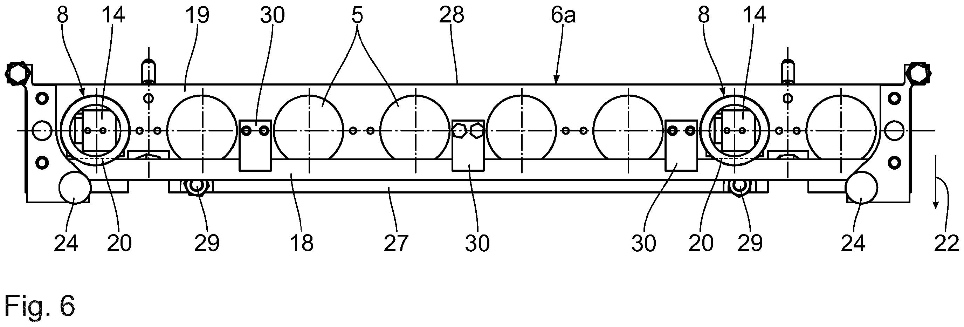

Eine Verdrehsicherungsleiste 18 (vgl. Fig. 3 bis 7) ist lösbar an einer Gehäuse-Hinterwand 19 am Kammergehäuse 6a montiert. Die Verdrehsicherungsleiste 18 wirkt mit umfangsseitigen Ausnehmungen 20 in den jeweiligen Messkolben zur Verdrehsicherung der Messkolben 8 zusammen. Hierdurch ist verhindert, dass diese Messkolben sich unerwünscht um deren Längsachse verdrehen. Die Verdrehsicherungsleiste 18 liegt abschnittsweise an den umfangsseitigen Ausnehmungen 20 der Messkolben 8 an.

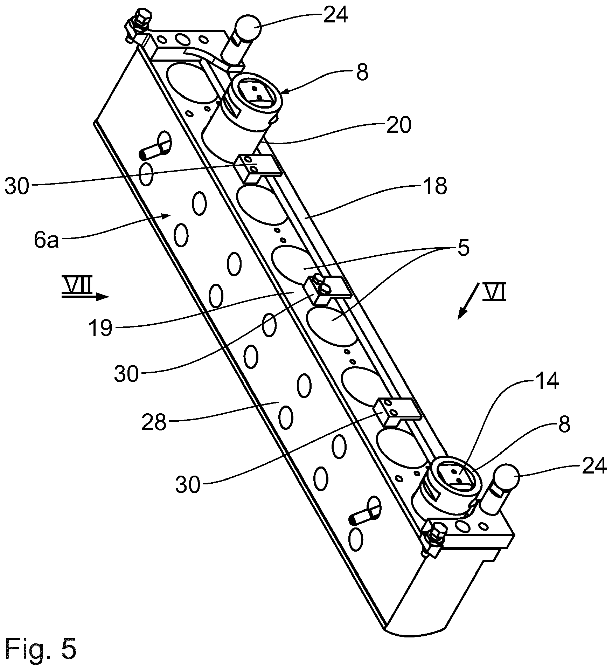

Ein zylinderseitiger Teil des Kammergehäuses 6a, der in den Fig. 5 bis 7 nicht dargestellt ist, hat einen Überstandsabschnitt 21 (vgl. Fig. 3), der nach hinten, also von den Portionierkammern 5 weg, über die Gehäuse-Hinterwand 19 übersteht.

Die Verdrehsicherungsleiste 18 ist so am Kammergehäuse 6a montiert, dass sie beim Lösen in einer Ausbaurichtung 22 (vgl. Fig. 3) senkrecht zur Verlagerungsrichtung 23 (vgl. Fig. 2) der Messkolben 8 vom Kammergehäuse 6a abgenommen werden kann. Diese Ausbaurichtung 22 ist vom Überstandsabschnitt 21 des Kammergehäuses 6a weg gerichtet.

Die Verdrehsicherungsleiste 18 ist am Kammergehäuse 6a über zwei werkzeuglose betätigbare Riegeleinheiten 24 montiert. Alternativ kann auch eine andere Anzahl derartiger Riegeleinheiten zur Montage der Verdrehsicherungsleiste 18 vorgesehen sein.

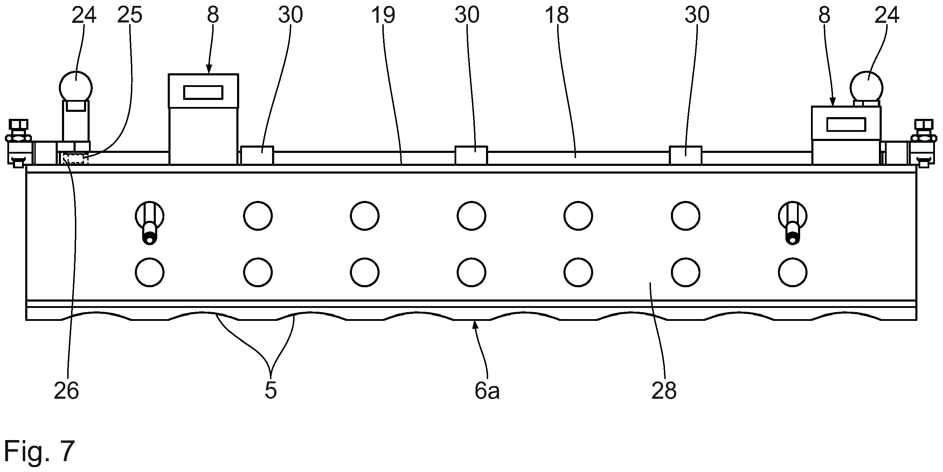

Die jeweilige Riegeleinheit 24 ist als gehäusefest geführter Bolzen 25 (vgl. Fig. 7) ausgeführt, der in eine Ausnehmung 26 in der Verdrehsicherungsleiste 18 eingreift. Der Bolzen 25 ist über eine in der Zeichnung nicht sichtbare Feder der Riegeleinheit 24 in einer Riegelstellung vorgespannt, die in der Fig. 7 dargestellt ist.

Ein Abschnitt der jeweiligen Portionierkammer 5 ist durch eine leistenförmige Messeinheit 27 begrenzt. Die Messeinheit 27 ist an einem Grundkörper 28 des Kammergehäuses 6a montiert. Durch eine einstellbare Relativportionierung der Messeinheit 27 zum Grundkörper 28 kann eine Länge der Portionierkammern 5 vorgegeben werden. Die Messeinheit 27 fluchtet mit der Gehäuse-Hinterwand 19. Montageelemente 29 zur Positionsvorgabe der Messeinheit 27 am Grundkörper 28 sind in der Messeinheit 27 versenkt angeordnet. Diese Montageelemente 29, die als gekonterte Schrauben gestaltet sind, stören somit eine Ausbaubewegung der Verdrehsicherungsleiste 18 in der Ausbaurichtung 22 nicht.

Ausgehend von der montierten Stellung der Verdrehsicherungsleiste 18, die beispielsweise in der Fig. 5 dargestellt ist, kann die Verdrehsicherungsleiste 18 vom Kammergehäuse 6a gelöst werden, indem die jeweiligen Betätigungsköpfe der Riegeleinheiten 24 gezogen werden, so dass die Bolzen 25 entgegen deren Vorspann-Federkraft aus den Ausnehmungen 26 in der Verdrehsicherungsleiste 18 ausrücken. Die Verdrehsicherungsleiste 18 kann in ausgerückter Stellung der beiden Bolzen 25 in der Ausbaurichtung 22 vom Kammergehäuse 6a abgenommen werden.

Haltekammern 30, die jeweils an der Gehäuse-Hinterwand 19 des Kammergehäuses 6a montiert sind, sichern die Verdrehsicherungsleiste 18 in der montierten Stellung gegen eine unerwünschte Verlagerung parallel zur Hubverlagerung der Messkolben 8.

## Patentansprüche

1. Mehrreihige Teigportioniervorrichtung
- mit einem Kammergehäuse (6a),
- mit einer Mehrzahl von Portionierkammern (5) zur Vorgabe einer portionierten Teigmenge,
- mit einer Mehrzahl von Messkolben (8), die in den Portionierkammern (5) längs einer Verlagerungsrichtung (23) jeweils verlagerbar sind,
-- zwischen einer eingezogenen Messstellung, in der der jeweilige Messkolben (8) in der jeweiligen Portionierkammer (5) ein vorgegebenes Portioniervolumen vorgibt,
-- und einer ausgeschobenen Ausstoßstellung,
- mit einer Verdrehsicherungsleiste (18), die an einer Gehäuse-Hinterwand (19) am Kammergehäuse (6a) lösbar montiert ist und die mit einer umfangsseitigen Ausnehmung (20) in den Messkolben (8) zur Verdrehsicherung der Messkolben (8) zusammenwirkt,
- wobei die Verdrehsicherungsleiste (18) so am Kammergehäuse (6a) montiert ist, dass sie beim Lösen in einer Ausbaurichtung (22) senkrecht zur Verlagerungsrichtung (23) der Messkolben (8) vom Kammergehäuse (6a) abgenommen werden kann,
- **dadurch gekennzeichnet, dass** das Kammergehäuse (6a) einen Überstandsabschnitt (21) aufweist, der über die Gehäuse-Hinterwand (19) übersteht, wobei die Verdrehsicherungsleiste (18) so ausgestaltet ist, dass sie werkzeuglos am Kammergehäuse (6a) montiert und werkzeuglos vom Kammergehäuse (6a) abgenommen werden kann.

2. Teigportioniervorrichtung nach Anspruch 1, **dadurch gekennzeichnet, dass** die Verdrehsicherungsleiste (18) am Kammergehäuse (6a) über mindestens eine werkzeuglos betätigbare Riegeleinheit (24) montiert ist.

3. Teigportioniervorrichtung nach Anspruch 2, **dadurch gekennzeichnet, dass** die Riegeleinheit (24) einen gehäusefest geführten Bolzen (25) aufweist, der in eine Ausnehmung (26) in der Verdrehsicherungsleiste (18) eingreift.

4. Teigportioniervorrichtung nach Anspruch 3, **dadurch gekennzeichnet, dass** der Bolzen (25) als Federbolzen ausgeführt ist, der in eine Riegelstellung vorgespannt ist.

5. Teigportioniervorrichtung nach einem der Ansprüche 1 bis 4, **dadurch gekennzeichnet, dass** das Kammergehäuse (6a) als Teil eines Portionierzylinders (7) ausgeführt ist, der schwenkbar ist
- zwischen einer Mess-Schwenkstellung, in der der Messkolben (8) in der Messstellung das vorgegebene Portioniervolumen vorgibt,
- und einer verschwenkten Ausstoß-Schwenkstellung, in der der Messkolben (8) zur Übergabe einer Teigportion an eine nachgelagerte Bearbeitungseinheit in die Ausstoßstellung verlagerbar ist.

6. Teigportioniervorrichtung nach einem der Ansprüche 1 bis 5, **dadurch gekennzeichnet, dass** zumindest ein Abschnitt der jeweiligen Portionierkammer (5) durch eine Messeinheit (27) zur Vorgabe einer Länge der Portionierkammer (5) begrenzt ist, die an einem Grundkörper (28) des Kammergehäuses (6a) montiert ist.

7. Teigportioniervorrichtung nach Anspruch 6, **dadurch gekennzeichnet, dass** die Messeinheit (27) mit der Gehäuse-Hinterwand (19) fluchtet, wobei Montageelemente (29) zur Montage der Messeinheit (27) am Grundkörper (28) in der Messeinheit (27) ) zur Vorgabe einer Länge der Portionierkammer (5) versenkt angeordnet sind.

8. Teigportioniervorrichtung nach einem der Ansprüche 1 bis 7, **gekennzeichnet durch** eine mehrreihige Ausführung mit einer entsprechenden Mehrzahl von Portionierkammern (5) und Messkolben (8).

9. Teigbearbeitungsanlage mit einer Teigportioniervorrichtung nach einem der Ansprüche 1 bis 8.

## Claims

1. A multi-row dough-portioning apparatus
- having a chamber housing (6a),
- having a number of portioning chambers (5) for predetermining a portioned quantity of dough,
- having a number of measuring pistons (8), which can each be displaced in the portioning chambers (5) along a displacement direction (23)
-- between a retracted, measuring position, in which the respective measuring piston (8) in the respective portioning chamber (5) predetermines a predetermined portioning volume,
-- and a pushed-out, ejecting position,
- having a rotation prevention bar (18), which is installed in a releasable manner on a rear wall (19) on the chamber housing (6a) and interacts with a circumferential recess (20) in the measuring pistons (8) in order to prevent rotation of the measuring pistons (8),
- wherein the rotation prevention bar (18) is installed on the chamber housing (6a) such that, upon release, it can be removed from the chamber housing (6a) in a removal direction (22) perpendicular to the displacement direction (23) of the measuring pistons (8),
**characterized in that** the chamber housing (6a) has a projecting section (21) which projects beyond the rear housing wall (19),
- wherein the rotation prevention bar (18) is configured to be installed on the chamber housing (6a) and removed from the chamber housing (6a) without any tools being required.

2. The dough-portioning apparatus according to claim 1, **characterized in that** the rotation prevention bar (18) is installed on the chamber housing (6a) via at least one locking unit (24) which can be actuated without any tools being required.

3. The dough-portioning apparatus according to claim 2, **characterized in that** the locking unit (24) has a housing-mounted bolt (25), which engages in a recess (26) in the rotation prevention bar (18).

4. The dough-portioning apparatus according to claim 3, **characterized in that** the bolt (25) is designed in the form of a spring bolt, which is prestressed into a locking position.

5. The dough-portioning apparatus according to any one of claims 1 to 4, **characterized in that** the chamber housing (6a) is designed in the form of part of a portioning cylinder (7), which can be pivoted
- between a measuring-specific pivoting position, in which the measuring piston (8), in the measuring position, predetermines the predetermined portioning volume,
- and a pivoted ejecting-specific pivoting position, in which the measuring piston (8) can be displaced into the ejecting position in order to transfer a portion of dough to a downstream processing unit.

6. The dough-portioning apparatus according to any one of claims 1 to 5, **characterized in that** at least one section of the respective portioning chamber (5) is bounded by a measuring unit (27) for predetermining a length of the portioning chamber (5), which is installed on a main body (28) of the chamber housing (6a).

7. The dough-portioning apparatus according to claim 6, **characterized in that** the measuring unit (27) is in alignment with the rear housing wall (19), wherein installation elements (29) for installing the measuring unit (27) on the main body (28) are arranged in a recessed manner in the measuring unit (27) for predetermining a length of the portioning chamber (5).

8. The dough-portioning apparatus according to any one of claims 1 to 7, **characterized by** a multi-row embodiment with a corresponding number of portioning chambers (5) and measuring pistons (8).

9. A dough-processing installation having a dough-portioning apparatus according to any one of claims 1 to 8.

## Revendications

1. Dispositif de portionnement de pâte sur plusieurs rangées
- avec un boîtier de chambre (6a),
- avec une pluralité de chambres de portionnement (5) pour prédéfinir une quantité de pâte portionnée,
- avec une pluralité de fioles de mesure (8) qui peuvent être déplacées dans les chambres de portionnement (5) respectivement le long d'une direction de déplacement (23),
-- entre une position de mesure rétractée, dans laquelle la fiole de mesure (8) respective prédéfinit un volume de portionnement prédéfini dans la chambre de portionnement (5) respective,
-- et une position d'éjection,
- avec une barrette anti-rotation (18) qui est montée de manière amovible sur une paroi arrière de boîtier (19) sur le boîtier de chambre (6a) et qui coopère avec un évidement périphérique (20) dans les fioles de mesure (8) pour empêcher la rotation des fioles de mesure (8),
- dans lequel la barrette anti-rotation (18) est montée sur le boîtier de chambre (6a) de telle sorte qu'elle peut être retirée du boîtier de chambre (6a) lors du desserrage dans une direction de démontage (22) perpendiculaire à la direction de déplacement (23) des fioles de mesure (8),
**caractérisé en ce que** le boîtier de chambre (6a) comprend une partie en saillie (21) qui dépasse de la paroi arrière de boîtier (19),
- dans lequel la barrette anti-rotation (18) est conçue de manière à pouvoir être montée sans outil sur le boîtier de chambre (6a) et à pouvoir être retirée sans outil du boîtier de chambre (6a).

2. Dispositif de portionnement de pâte selon la revendication 1, **caractérisé en ce que** la barrette anti-rotation (18) est montée sur le boîtier de chambre (6a) par l'intermédiaire d'au moins une unité de verrouillage (24) pouvant être actionnée sans outil.

3. Dispositif de portionnement de pâte selon la revendication 2, **caractérisé en ce que** l'unité de verrouillage (24) présente un boulon (25) guidé de manière solidaire du boîtier, qui s'engage dans un évidement (26) dans la barrette anti-rotation (18).

4. Dispositif de portionnement de pâte selon la revendication 3, **caractérisé en ce que** le boulon (25) est réalisé sous forme de boulon à ressort qui est précontraint dans une position de verrouillage.

5. Dispositif de portionnement de pâte selon l'une quelconque des revendications 1 à 4, **caractérisé en ce que** le boîtier de chambre (6a) est réalisé en tant que partie d'un cylindre de portionnement (7) qui peut pivoter.
- entre une position de mesure pivotante, dans laquelle la fiole de mesure (8) prédéfinit le volume de portionnement prédéfini dans la position de mesure,
- et une position pivotée d'éjection, dans laquelle la fiole de mesure (8) peut être déplacée dans la position d'éjection pour transférer une portion de pâte à une unité de traitement située en aval.

6. Dispositif de portionnement de pâte selon l'une quelconque des revendications 1 à 5, **caractérisé en ce qu'**au moins une section de la chambre de portionnement (5) respective est délimitée par une unité de mesure (27) pour prédéfinir une longueur de la chambre de portionnement (5), qui est montée sur un corps de base (28) du boîtier de chambre (6a).

7. Dispositif de portionnement de pâte selon la revendication 6, **caractérisé en ce que** l'unité de mesure (27) est alignée avec la paroi arrière (19) du boîtier, dans lequel des éléments de montage (29) pour le montage de l'unité de mesure (27) sur le corps de base (28) sont disposés en retrait dans l'unité de mesure (27) pour prédéfinir une longueur de la chambre de portionnement (5).

8. Dispositif de portionnement de pâte selon l'une quelconque des revendications 1 à 7, **caractérisé par** un modèle à plusieurs rangées avec une pluralité correspondante de chambres de portionnement (5) et de fioles de mesure (8).

9. Installation de traitement de pâte comprenant un dispositif de portionnement de pâte selon l'une quelconque des revendications 1 à 8.
